# EUROPEAN PATENT SPECIFICATION

(11) **EP 1 673 554 B1**
(45) Date of publication and mention of the grant of the patent: **12.08.2009**
(21) Application number: 02763140.7
(22) Date of filing: 14.08.2002
(51) Int. Cl.: F16H 3/76, F16H 3/42, F16H 3/083, F16H 63/30, F16D 19/00, F16D 13/16, F16H 3/04

(54) **TRANSMISSION RATIO CHANGE UNIT HAVING PERMANENT STEPPED MESHING GEARS**
GETRIEBE MIT NAHEZU STUFENLOSER ÜBERSETZUNG MIT DAUERND IN EINGRIFF STEHENDEN RÄDERN
TRANSMISSION A ENGRENAGES A VARIATION QUASI-CONTINUE DE VITESSE

(30) Priority: 20.08.2001 PL 34920901
(43) Date of publication of application: 28.06.2006
(60) Divisional application: 07017116.0
(73) Proprietor: Pawelec, Slawomir, 02 798 Warszawa (PL)
(72) Inventor: Pawelec, Slawomir, 02 798 Warszawa (PL)
(86) International application number: PCT/PL2002/000061
(87) International publication number: WO 2003/025426

(56) References cited:
- DE-A- 2 820 147
- DE-A1- 1 500 390
- DE-A1- 19 512 642
- GB-A- 1 308 515
- US-A- 2 600 562
- US-A- 2 697 365
- US-A- 2 697 365
- US-A- 2 711 105
- US-A- 2 711 105
- US-A- 3 067 626
- US-A- 3 826 152
- US-A- 4 088 037
- US-A- 4 191 069
- US-A- 5 029 689

## Description

The invention solves the problem of the power transmission with simultaneous and continuous change of gear ratio. The invention solves also another problem of providing the power transmission without necessity to use the clutching and synchronising mechanisms.

The problem of continuous ratio change has been approached by several inventors. Polish patent PL 157252 B1 discloses variable speed gear provided with non-rotating conical gear mounted in the housing. The teeth of the conical gear are placed on spiral protrusion which enables at least three sliding gear-wheels to mesh with the conical gear. The gear-wheels are displaced along the conical gear with use of the driving shackles, which are connected to the swing-frame gear trains. Both the swing-frame gear trains and the driving shackles are connected through the driver to first (i.e. driving) shaft. The swing-frame gear trains are also connected to the gear-wheel mounted on second (i.e. driven) shaft. With this gear a continuous and variable speed gear change may be executed with no interruption of the torque supply. The change of rotations to pre-selected rotational speed is realised continuously.

Another Polish patent PL 179658 B1 discloses different solution of continuous ratio change. The input (i.e. driving) shaft is joined to a bevelled guide provided with a sliding member. This sliding member is coupled with a gear-wheel through an elastic string mounted circumferentially on said gear-wheel. The string is fastened to the sliding member and transmits the rotations of the oblique guide to the gear-wheel. The to-and-through rotations of the latter are transmitted with coaxial one-way clutching wheel to the output (i.e. driven) shaft. A spring locked to the support provides a force necessary for the clutch to activate and deactivate the torque transmission. The transmission ratio depends on the distance of the sliding member from the axis of rotation of the input shaft: the smaller the distance, the higher is the transmission ratio. On the contrary, when the distance grows, the transmission ratio decreases.

American patent US 3,826,152 discloses a variable-ratio gear transmission, where a toothed body of generally conical shape, on an output shaft, is engaged by one of two constantly meshing pinions whose mate slides on a driven input shaft. The teeth of the body form several axially adjoining zones which may be successive turns of a helicoidal spiral, or a succession of coaxial arcuate shoulders of progressively increasing diameter separated by eccentric ramps of intermediate curvature. The two pinions are mounted on a carriage, swinging about the input shaft, with the off-axial pinion biased into permanent engagement with the toothed body. At least in the case of a helicoidally spiralling track, a worm drive coupled with the output shaft causes a continuous axial displacement of the carriage during rotation of the input shaft to provide a substantially continuously changing transmission ratio. In this mechanism generally conical toothed body is mounted on the output shaft rigidly connected to the load. The spiral path of spirally toothed body, mounted coaxially on the output shaft, is opened at both ends which makes meshing pinion to loose permanent engagement with the spiral gear if not prevented by other means, e.g. by limit switches. The other proposed toothed bodies, combined of planar gear-wheels and planar transition elements (spiral zones), provide smoothed but still stepped transmission ratios. Although disengagement of the gears is avoided, at least the transition elements are mounted off-centre causing eccentricity of load of the conical toothed member. This may be a factor limiting amount of load or speed of rotation of the gear.

Another American patent US 4,191,069 discloses a multi-speed gear transmission which has two gear mechanisms, each with several gear ratios, interposed between drive input and output shafts of the transmission. The two gear mechanisms are mechanically connected in parallel with the drive input shaft and driving respective crown wheels of a differential gear the planet carrier or spider of which is in turn mechanically coupled to the transmission output shaft. Individual gear-wheels interposed between input and output shafts are mounted adjacent one to another thus forming a body of conical shape ("Norton gear"). The gear mechanism provides a number of ratios equal to the number of the gear-wheels in the conical body, however the change of ratio is stepped instead of being continuous. Besides, any change of ratio includes succesive decoupling, synchronisation and coupling of the gear-wheels, making the process of change of ratio complicated and far from being smooth.

Two American patents US 2,697,365 and US 2,711,105 disclose power transmission systems based on the differential mechanisms and on conical toothed members. Various solutions proposed in the document US 2,697,365 show the gear-boxes with coaxial input and output shafts, connected through the differential gear transmitting the torque to two obliquely mounted, spirally toothed conical members. These conical members are coaxially fit with additional but separate bevel gears which are permanently engaged with another bevel gear fastend on the output shaft. The appliance requires use of two conical members, necessary to receive rotations from the differential gear. The other document US 2,711,105 also teaches about a gear-box with coaxial input and output shafts, but connected through two obliquely mounted differential gears, sliding along two differential shafts and transmitting the torque to spirally toothed conical member mounted on the output shaft. Likewise in the preceding invention, the differential shafts are coaxially fit with additional but separate bevel gears which are permanently engaged with another bevel gear fastend on the input shaft. Contrary to former disclosure, this appliance requires use of two differential gears, necessary to receive rotations from one conical member.

Both documents US 2,697,365 and US 2,711,105 teach about the transmission units with differential shafts which have to be parallel to the generatrices of the conical members. The solutions presented by these documents limit the generatrices of the conical members to exactly linear ones. No other shape of conical member may be applied here. Due to relative skewness of various rotating elements, i.e. conical members and differential shafts, the manufacture of the transmission boxes according to the above inventions is rather complicated while possibility of adaptation of general concept to individual needs seems to be much restricted.

The aim of the invention is to propose a transmission unit providing continuous, in contrary to stepped, change of ratio, and based on simple mechanism disencumbered of mechanically complicated differential gear-box. Next aim of the invention is to offer a solution providing continuous change of ratio without necessity of engagement, disengagement and synchronisation of the gears involved in the transmission of torque. Yet another aim of the invention is to make the transmission unit relatively easy in manufacture and susceptible to easy adaptation to the user's particular needs. Still another aim of the invention is to provide the user with possibility of receiving the torque from two output shafts, with reciprocate change of ratio.

The above aims are achieved through permanent meshing of all toothed members involved in the torque transmission and through mounting them on a number of parallel shafts. The key feature of the invention is application of generally conical, spirally toothed member and mounting it on an intermediate shaft. Thus through exchange of only one, intermediate conical member the user may match the features of the transmission unit to his particular needs. Neither the input nor the output of the transmission unit shall be affected by this procedure.

The transmission unit according to the invention provides for continuous change of ratio and continuous transmission of power by a set of one or more gear-wheels permanently meshed with one spirally toothed member of generally conical shape, where said unit has three or preferably four parallel shafts, first shaft is the input shaft, second shaft is the intermediate shaft, and third and preferably fourth shafts are one or preferably two output shafts, where said input shaft is connected to said intermediate shaft, which is coaxially provided with spirally toothed member shaped on a surface of generally conical member and where said spirally toothed member is permanently meshed with one or preferably two gear-wheels mounted on respective output shafts.

The spirally toothed member is preferably finished by the gear-wheels at both ends so that the teeth on the gear-wheels are angularly synchronised with corresponding outmost teeth on the spiral path of the spirally toothed member. The term "angular synchronisation" here means that the teeth of the spiral path at its end adjacent to finishing gear-wheel meet the teeth of the latter so that corresponding teeth are aligned. This solution enables the output gear-wheel (i.e. the gear-wheel mounted on the output shaft) to translate smoothly from the spiral to the finishing gear-wheel, and vice-versa, without any discontinuity in the torque transmission.

The input shaft is preferably provided with a pinion meshed, preferably in a planetary carrier, with another pinion mounted on the intermediate shaft to allow translation of said intermediate shaft around circular line to adjust its spatial position in relation to the output shafts while the process of continuous change of the transmission ratio is executed. The intermediate shaft is subject to translation around circular line, which is necessary to avoid disengagement of the output shaft or destruction of the transmission unit. During this translation the axis of the intermediate shaft stands for a generatrix of virtual cylinder coaxial with the input shaft, and covers a stripe of that cylinder surface. The means for mounting of the intermediate shaft, i.e. the bearings movable in the frame or the like are not shown on the drawing and are not comprised in this invention. Generally the meshing of the two pinions may be of any kind and the planetary carrier stands here for preferred embodiment, because the use of it shall simplify control of the intermediate shaft translation.

Due to parallel placement of all shafts in the gear-box, the outline of generally conical member is not limited to any particular shape. Reasonably the generally conical member shall be axially symmetric and mounted on-centre to prevent e.g. from unintended vibrations, excessive wear, etc. However this is not a preclusive condition.

Preferably the outer surface of generally conical member mounted on the intermediate shaft is generated with linear generating outline.

Also preferably the outer surface of generally conical member mounted on the intermediate shaft is generated with S-shaped generating outline.

Said S-shaped generating outline is concave between the top and the middle, and it is convex between the middle and the base. However in another embodiment S-shaped generating outline is convex between the top and the middle, and it is concave between the middle and the base.

The gear-wheels preferably slide in opposite directions along respective output shafts while the process of continuous change of the transmission ratio is executed.

In another embodiment the gear-wheels are mounted rigidly on respective output shafts which slide in their bearings while the process of continuous change of the transmission ratio is executed.

The gear-wheels move in opposite directions together with respective output shafts while the process of continuous change of the transmission ratio is executed.

With the transmission unit according to the invention the torque is transmitted continuously from the input to the output of the gear-box and the change of ratio is smooth. Finishing the spiral path with two gear-wheels at both ends secures the output gear-wheels from disengagement and enables them to continue their rotation and transmission of the torque even when the process of change of ratio is completed. The change of ratio does not involve external mechanism like a clutch or a synchroniser except of a regulator controlling the process of change of gear ratio. The gear-box with duplicated output may be applied in sophisticated machines where higher speed of rotation of one output shaft has to be correlated with lower speed of rotation of another output shaft and where acceleration and deceleration of both rotational speeds have to be automatically synchronised. If necessary in specific applications, the output shafts may be fit up with external differential mechanism. Elimination of the clutch effects in reduction of energy loss for heat produced in most of gear-boxes during coupling/decoupling of cooperating members, no matter whether the clutch is frictional, magnetic or other. The gear-box according to the invention is compact and may transmit torques of high values.

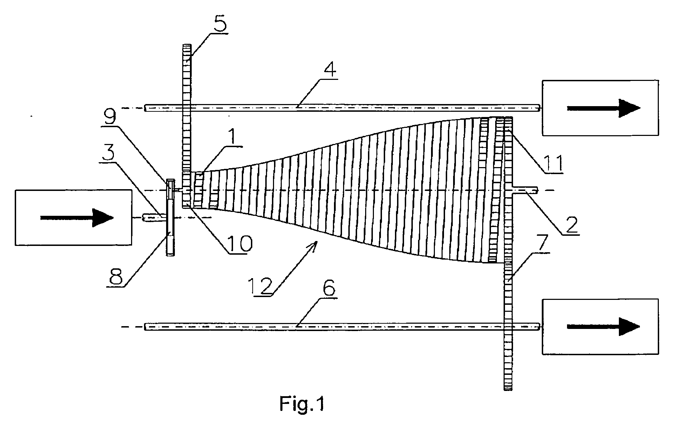

The invention in one of preferred embodiments is schematically shown in an elevation view on Fig. 1.

The transmission unit comprises a set of one or more gear-wheels permanently meshed with a toothed member of generally conical shape, where said unit has three or preferably four shafts, first shaft is the input shaft (3), second shaft is the intermediate shaft (2), and third and preferably fourth shafts are one or preferably two output shafts (4) and (6), where said input shaft (3) is joined to said intermediate shaft (2), which is provided with the toothed member (1) shaped on generally conical member (12) and permanently meshed with one or preferably two gear-wheels (5) and (7) transmitting their rotations to respective output shafts (4) and (6). The toothed member (1) has teeth placed along generally conical spiral. The arrows in rectangular boxes symbolise the directions of the power flow through the transmission unit, i.e. from the input shaft (3) towards the output shafts (4) and (6).

In preferred embodiment the toothed member (1) is finished in the gear-wheels (10), (11) at both ends, and the teeth of the gear-wheels (10), (11) are angularly synchronised with corresponding outmost teeth on the spiral part of the toothed member (1). If constant transmission ratio is required, the output gear-wheels (5) and (7) are meshed with said gear-wheels (10), (11) terminating the conical member (12). When the process of continuous change of ratio is initiated, the gear-wheels (5) and (7) slide smoothly along their axis of rotation from said gear-wheels (10), (11) towards spiral part of the toothed member (1). The translation of both gear-wheels (5) and (7) terminates when they reach the gear-wheels (10), (11) at opposite sides of the conical member (12).

The input shaft (3) is preferably provided with the pinion (8) meshed in a planetary carrier with another pinion (9) mounted on the intermediate shaft (2) to make the latter to adjust its position in relation to the output shafts (4) and (6) during the process of continuous change of the transmission ratio. A regulator controlling the positions of the planetary carrier and of the output gear-wheels (5) and (7), and in consequence controlling the transmission ratio is not shown on the drawing. The planetary carrier connecting the pinions (8) and (9) may be replaced with another kind of meshing securing permanent engagement of the intermediate shaft (2) to the input shaft (3).

In one embodiment the outer surface of generally conical member (12) mounted on the intermediate shaft (2) is generated with linear generating outline. In this case the spiral is exactly conical. In another embodiment the outer surface of generally conical member (12) is generated with slightly bent (S-shaped) generating outline. In first of two alternative embodiments this S-shaped generating outline is concave between the top (i.e. narrower end) and the middle, and it is convex between the middle and the base of the conical member, defining the bottle-like curvature of the toothed spiral (1). In second embodiment the S-shaped generating outline is convex between the top and the middle, and it is concave between the middle and the base, defining the bell-like curvature of the toothed spiral (1).

The gear-wheels (5) and (7) preferably slide freely along respective output shafts (4) and (6) during the process of continuous change of the transmission ratio. Only the translational relative motion is allowed, the rotation of the gear-wheels (5) and (7) being directly transmitted to the rotation of respective output shafts (4) and (6). In another embodiment the gear-wheels (5) and (7) are mounted rigidly on respective output shafts (4) and (6) which slide in their bearings (not shown on the drawing) during the process of continuous change of the transmission ratio.

The translational motion, e.g. horizontal on Fig. 1, of the gear-wheels (5) and (7) along their output shafts (4) and (6), or of these gear-wheels together with their shafts occurs only during the phase of continuous change of the transmission ratio. The gear-wheels (5) and (7) move in opposite directions along the axis of respective output shafts (4) and (6). As presented on Fig. 1, the gear-wheel (5) moves to the right while the gear-wheel (7) moves to the left, and vice-versa. The planetary carrier driven by the input shaft (3) secures permanent mesh of the output gear-wheels (5) and (7) with the toothed member 1.

The transmission unit according to the invention may be used in all mechanisms where smoothly and continuously executed change of the transmission ratio is required. This invention may also be applicable in the mechanisms where simultaneous, continuous, synchronised and smoothly executed reduction and augmentation of the transmission ratios on two output shafts is needed.

## Claims

1. A transmission unit providing continuous change of ratio and continuous transmission of power by a set of one or more gear-wheels permanently meshed with one spirally toothed member of generally conical shape **characterised in that** said unit has three or preferably four parallel shafts, first shaft is the input shaft (3), second shaft is the intermediate shaft (2), and third and preferably fourth shafts are one or preferably two output shafts (4) and (6), where said input shaft (3) is connected to said intermediate shaft (2), which is coaxially provided with spirally toothed member (1) shaped on a surface of generally conical member (12) and where said spirally toothed member (1) is permanently meshed with one or preferably two gear-wheels (5) and (7) mounted on respective output shafts (4) and (6).

2. The transmission unit **according to claim 1** wherein the spirally toothed member (1) is finished by the gear-wheels (10), (11) at both ends so that the teeth on the gear-wheels (10), (11) are angularly synchronised with corresponding outmost teeth on the spiral path of the spirally toothed member (1).

3. The transmission unit **according to claim 1** wherein the input shaft (3) is provided with a pinion (8) meshed preferably in a planetary carrier with another pinion (9) mounted on the intermediate shaft (2) to allow translation of said intermediate shaft (2) around circular line to adjust its spatial position in relation to the output shafts (4) and (6) while the process of continuous change of the transmission ratio is executed.

4. The transmission unit **according to claim 1** wherein the outer surface of generally conical member (12) mounted on the intermediate shaft (2) is generated with linear generating outline.

5. The transmission unit **according to claim 1** wherein the outer surface of generally conical member (12) mounted on the intermediate shaft (2) is generated with S-shaped generating outline.

6. The transmission unit **according to claim 5** wherein S-shaped generating outline is concave between the top and the middle, and which is convex between the middle and the base.

7. The transmission unit **according to claim 5** wherein S-shaped generating outline is convex between the top and the middle, and which is concave between the middle and the base.

8. The transmission unit **according to claim 1** wherein the gear-wheels (5) and (7) slide in opposite directions along respective output shafts (4) and (6) while the process of continuous change of the transmission ratio is executed.

9. The transmission unit **according to claim 1** wherein the gear-wheels (5) and (7) are mounted rigidly on respective output shafts (4) and (6) which slide in their bearings while the process of continuous change of the transmission ratio is executed.

10. The transmission unit **according to claim 9** wherein the gear-wheels (5) and (7) move in opposite directions together with respective output shafts (4) and (6) while the process of continuous change of the transmission ratio is executed.

## Patentansprüche

1. Die Uebertragungseinheit, die durchgehend eine Aenderung der Uebersaetzung sichert, wie auch durchgehende Kraftuebertragung durch Arbeitskreis einer oder mehreren Zahnraeder immer ineinnander verzahnt mit einer spiralformigverzahnten Steuereinheit in Form eines Konus gekenzeichnet **dadurch**, dass die erwaente Einheit drei oder besser vier paralerliegende Wellen hat. Die erste Welle hat die funktion der Eingabe (3), die zweite Welle ist als Verbindungs/Mittelbarwelle (2), die dritte und am besten dritte und vierte Wellen sind gleichzeitig als Ausgaben/Ausgangswellen (4) und (6), wo schon die erwaente Eingabewelle (3) mit der Mittelwelle (2) verbunden ist, die koaxial eine spiralformige Verzahnung der Steuereinheit (1) besitzt, geformt auf Konusoberflaeche der Steuereinheit (12) und wo die spiralformig verzahnte Steuereinheit (1) sich durchgehend mit einem oder besser beiden Zahnraeder (5) und (7) verzahnt, die auf den entspraechenden Ausgaben/Ausgangswellen (4) und (6) befestigt sind.

2. Die Uebertragungseinheit nach Anspruch 1 **gekennzeichnet dadurch, dass** die spiralformig verzahnte Steuereinheit (1) mit den Zahnraeder (10) und (11) auf beiden Seiten/Enden endet, so, dass die Verzahnung der Zahnraeder (10) und (11) winkelmaessig synchronisiert mit entspraechender Auserverzahnung auf dem spiralformigen Arbeitsweg von der spiralgormigverzahnten Steuereinheit (1) ist.

3. Die Uebertragungseinheit nach Anspruch 1 **gekennzeichnet dadurch, dass** die Eingabewelle (3) einen Zahnrad (8) besitzt, der sich einfach in einem Planetargetriebe mit einem anderem Zahnrad (9) verzahnt, das auf der Mittelbarwelle (2) montiert ist, dessen Aufgabe ist die Veraenderung der Mittelbarwelle (2) in Kreisform fuer die Anpassung seiner raeumlichen Position zu Augangs/Ausgabewelle (4) und (6) waerend der Ausfuehrung von der veraenderten Uebersaetzungsarbeit.

4. Die Uebertragungseinheit nach Anspruch 1 **gekennzeichnet dadurch, dass** die Konusauseroberflaeche der Steuereinheit (12) auf der Mittelbarwelle (2) lineal erzeugend montiert ist.

5. Die Uebertragungseinheit nach Anspruch 1 **gekennzeichnet dadurch**, der Mittelbarwelle (2) S - formig erzeugend ist.

6. Die Uebertragungseinheit nach Anspruch 5 **gekennzeichnet dadurch gekennzeichnet, dass** die S-forminge erzeugend konkav zwischen dem Oberpunkt und Mittelpunkt, und konvex zwischen Mittelpunkt und der Grundlage ist.

7. Die Uebertragungseinheit nach Anspruch 5 **gekennzeichnet**, dass die S - formige erzeugend konvex zwischen Oberpunkt und Mittelpunkt, und konkav zwischen Mittelpunkt und der Grundlage ist.

8. Die Uebertragungseinheit nach Anspruch 1 **gekennzeichnet**, dass die Zahnraeder (5) und (7) gegenseitig laengs entspraechenden Ausgangswellen (4) und (6), waerend der Ausfuehrung der veaenderten Uebersaetzungsarbeit gleiten.

9. Die Uebertragungseinheit nach Anspruch 1 **gekennzeichnet**, dass die Zahnraeder (5) und (7) auf den entspraechenden Ausgangswellen festmontiert sind (4) (6) und in eigenen Laegern waerend der Ausfuehrung der veraenderten Uebersaetzungsarbeit gleiten.

10. Die Uebertragungseinheit nach Anspruch 9 **gekennzeichnet**, dass die Zahnraeder (5) und (7) sich in Gegenrichtung zusammen mit entspraechenden Ausgangswellen (4) und (6) waerend der Ausfuehrung der veraenderten Uebersaetzungsarbeit bewegen.

## Revendications

1. L'unité de transmission assurante le changement continu du rapport et la transmission continue de la puissance par un ensemble comprenant un ou plus des roues dentées s'engrenées constamment avec un membre denté à spirale, cet membre ayant une forme principalement conique, **caractérisée en ce que** la dite unité contient trois ou préférablement quatre arbres parallèles, le premier arbre est un arbre d'entré (3), le deuxième arbre est un arbre intermédiaire (2), et le troisième et préférablement le quatrième arbres ce sont un ou préférablement deux arbres de sortie (4) et (6), où le dit arbre d'entré (3) est conjugué avec le dit arbre intermédiaire (2), lequel est coaxialement équipé avec le membre denté à spirale (1) formé en surface du membre de forme principalement conique (12) et où le dit membre denté à spirale (1) s'est engrené constamment avec une ou préférablement deux roues dentées (5) et (7) attachées sur correspondants arbres de sortie (4) et (6).

2. L'unité de transmission selon la revendication 1, **caractérisée en ce que** le membre denté à spirale (1) est fini par les roues dentées (10), (11) en deux bouts, alors que les dents sur les roues dentées (10), (11) sont angulairement synchronisés avec correspondants dents extrêmes sur un chemin spirale du membre denté à spirale (1).

3. L'unité de transmission selon la revendication 1, **caractérisée en ce que** l'arbre d'entré (3) est équipé par un pignon (8) s'engrené préférablement en engrenage planétaire avec l'autre pignon (9) attaché sur l'arbre intermédiaire (2) pour rendre possible une translation du dit arbre intermédiaire (2) autour de la ligne circulaire pour ajuster sa position spatiale en relation aux arbres de sortie (4) et (6) pendant que le procédé du changement continu de rapport de transmission est exécuté.

4. L'unité de transmission selon la revendication 1, **caractérisée en ce que** la surface éxterieure du membre de forme principalement conique (12) attaché sur l'arbre intermédiaire (2) est générée avec une génératrice linéaire.

5. L'unité de transmission selon la revendication 1, **caractérisée en ce que** la surface éxterieure du membre de forme principalement conique (12) attaché sur l'arbre intermédiaire (2) est générée avec une génératrice S-formée.

6. L'unité de transmission selon la revendication 5, **caractérisée en ce que** S-formée génératrice est concave entre le sommet et le milieu, et laquelle est convexe entre le milieu et la base.

7. L'unité de transmission selon la revendication 5, **caractérisée en ce que** S-formée génératrice est convexe entre le sommet et le milieu, et laquelle est concave entre le milieu et la base.

8. L'unité de transmission selon la revendication 1, **caractérisée en ce que** les roues dentées (5) et (7) glissent en directions opposées le long des correspondants arbres de sortie (4) et (6) pendant que le procédé du changement continu de rapport de transmission est exécuté.

9. L'unité de transmission selon la revendication 1, **caractérisée en ce que** les roues dentées (5) et (7) sont attachées aride en correspondants arbres de sortie (4) et (6) lequels glissent dans leurs paliers pendant que le procédé du changement continu de rapport de transmission est exécuté.

10. L'unité de transmission selon la revendication 9, **caractérisée en ce que** les roues dentées (5) et (7) mouvent en directions opposées à la fois avec correspondants arbres de sortie (4) et (6) pendant que le procédé du changement continu de rapport de transmission est exécuté.
